# EUROPEAN PATENT SPECIFICATION

(11) **EP 3 098 445 B1**
(45) Date of publication and mention of the grant of the patent: **27.11.2019**
(21) Application number: 15189535.6
(22) Date of filing: 13.10.2015
(51) Int. Cl.: F04B 1/04, F04B 1/053, F04B 17/02, F03C 1/053

(54) **HYDRAULIC MACHINE OF RADIAL-PISTON TYPE, WIND TURBINE GENERATOR HAVING THE SAME, AND METHOD OF PROVIDING SEAL**
RADIALKOLBENHYDRAULIKMASCHINE, WINDTURBINENGENERATOR DAMIT UND VERFAHREN ZUR DICHTUNGSBEREITSTELLUNG
MACHINE HYDRAULIQUE DE TYPE À PISTONS RADIAUX, GÉNÉRATEUR DE TURBINE ÉOLIENNE COMPORTANT CELUI-CI ET PROCÉDÉ DE FOURNITURE D'ÉTANCHÉITÉ

(30) Priority: 29.05.2015 JP 2015109741
(43) Date of publication of application: 30.11.2016
(73) Proprietor: MITSUBISHI HEAVY INDUSTRIES, LTD., Tokyo 108-8215 (JP)
(72) Inventor: Nishimura, Shinichiro, Tokyo, 108-8215 (JP); Uehara, Osamu, Tokyo, 108-8215 (JP); Ochiai, Hiroyasu, Tokyo, 108-8215 (JP)
(74) Representative: Henkel & Partner mbB

(56) References cited:
- EP-A1- 2 757 262
- EP-A1- 2 770 201
- EP-A2- 2 631 477
- FR-A- 1 396 252
- US-A1- 2006 012 070
- US-B1- 6 349 944

## Description

### TECHNICAL FIELD

The present disclosure relates to a hydraulic machine of radial-piston type, a wind turbine generator having the same, and a method of providing a seal for a hydraulic machine of radial-piston type.

### BACKGROUND ART

A hydraulic machine of radial-piston type including a plurality of pistons arranged in a radial fashion is generally known.

For instance, as a hydraulic transmission of a wind turbine generator, combination of a plurality of hydraulic machines (a hydraulic pump and a hydraulic motor) is known.

For a wind turbine generator, a gearbox has been conventionally used as a drivetrain in many cases. Now, wind turbine generators equipped with a hydraulic transmission including the above hydraulic pump are attracting attention in terms of weight and cost in accordance with the increase in size of the wind turbine generators.

WO2014/002522A and WO2013/080399A disclose a hydraulic machine of radial-piston type which functions as a drivetrain of a wind turbine generator. The hydraulic machines of radial-piston type described in these documents include pistons which reciprocate in cylinders, rollers mounted to the pistons, and a cam with a cam surface contacting the rollers.

### SUMMARY

The thickness of members constituting a hydraulic machine of radial-piston type has been reduced recently in order to reduce weight, and a dividable structure has been recently beginning to be adopted in order to improve maintainability and transportability. For instance, while a hydraulic pump of a wind turbine generator tends to increase in size due to the increase in the output of wind turbine generators, the load capacity of a nacelle accommodating the hydraulic pump is limited. Thus, the thickness of members constituting a hydraulic pump is reduced. Further, from the perspective of maintainability and transportability, a dividable structure is adopted for members constituting a hydraulic pump, as in division of a cylinder block.

In a hydraulic machine of radial-piston type, various stresses are caused by a thrust load and a rotational moment from a rotation shaft, or an influence of working oil (e.g. pulsation), for instance. Thus, weight reduction and adoption of a dividable structure may cause the structure of a hydraulic machine of radial-piston type to undergo elastic deformation easily, thereby raising the possibility of leakage of oil from between the divided members.

In this regard, none of WO2014/002522A and WO2013/080399A discloses a specific measure for preventing oil leakage taking account of elastic deformation due to various stresses acting on a hydraulic machine of radial-piston type.

EP2631477A2 discloses a hydraulic machine of a radial-piston type in which a pump casing is formed by a pair of end plates and a cylindrical case provided between the end plates. The pump casing is configured to cover cylinders, pistons, a high-pressure manifold, a low-pressure manifold etc. and it prevents the operating oil from leaking to the outside by means of a circumferential gasket between the end plates and the cylindrical case. However, the machine of document EP2631477A2 does not comprise a cylinder block including a plurality of segments divided in the circumferential direction; a third seal disposed in the axial direction so as to fill a gap between a pair of segments arranged adjacently in the circumferential direction among the plurality of segments; a recessed groove formed on the at least one end plate and the cylinder block, the recessed groove extending in the circumferential" direction along a joint line between the at least one end plate and the cylinder block so that the gap between the at least one end plate and the cylinder block has an opening into a groove bottom of the recessed groove, and wherein the at least one first seal is disposed in the recessed groove.

FR1396252A discloses a hydraulic machine where the cylinder blocks or pump casings of plural cylinders project radially from a central housing like in a radial engine. A seal is a circumferential seal that extends around the respective protruding cylinder blocks.

US6349944B1 describes a sealing structure using a liquid gasket for an internal combustion engine.

US2006/0012070A1 describes a foam-in-place gasket having reduced friction characteristics.

An object of at least some embodiments of the present invention is to provide a hydraulic machine of radial-piston type whereby it is possible to prevent oil leakage securely even if elastic deformation occurs in the hydraulic machine of radial-piston type, a wind turbine generator, and a method of providing a seal.
(1) A hydraulic machine of radial-piston type according to the present invention includes the features of claim 1, including: a plurality of pistons arranged in a circumferential direction of the hydraulic machine; a cylinder block in which a plurality of cylinders for guiding the respective pistons reciprocably along a radial direction of the hydraulic machine is formed; a cam disposed in a cam chamber located radially inside or outside the cylinder block so as to face the plurality of pistons; at least one end plate disposed adjacently to the cylinder block in an axial direction of the hydraulic machine, the at least one end plate forming a stationary part of the hydraulic machine together with the cylinder block; a first inner flow channel communicating with working chambers formed by the pistons and the cylinders, the first inner flow channel being disposed inside the cylinder block so as to have an opening into a gap between the cylinder block and the at least one end plate, the gap communicating with the cam chamber; a second inner flow channel having an opening end which faces an opening end of the first inner flow channel via the gap, the second inner flow channel being disposed inside the at least one end plate so as to communicate with the first inner flow channel via the gap; at least one first seal disposed in the circumferential direction of the hydraulic machine so as to fill the gap between the cylinder block and the at least one end plate; and a second seal disposed in the gap between the cylinder block and the at least one end plate so as to surround the opening end of the first inner flow channel and the opening end of the second inner flow channel.
   In the above hydraulic machine of radial-piston type (1), the stationary part has a dividable structure including at least the cylinder block and the at least one end plate disposed adjacently to the cylinder block. In such dividable structure, a gap may be formed between the cylinder block and the at least one end plate. On the other hand, the inner flow channel (the first inner flow channel and the second inner flow channel) through which the working oil flows extends so as to straddle the cylinder block and the at least one end plate, while the cam chamber that is to be filled with oil is surrounded by the cylinder block and the at least one end plate. Thus, the inner flow channel and the cam chamber communicate with the gap. In such configuration, if the hydraulic machine of radial-piston type undergoes elastic deformation due to various stresses, for instance, the risk of oil leakage via the gap becomes high.
   Thus, the above hydraulic machine of radial-piston type includes the first seal disposed in the circumferential direction so as to fill the gap between the cylinder block and the at least one end plate, and the second seal disposed inside the gap between the cylinder block and the at least one end plate so as to surround the opening end of the first inner flow channel and the opening end of the second inner flow channel. In this way, even if the hydraulic machine of radial-piston type undergoes elastic deformation due to various stresses, it is possible to prevent oil leakage from the inner flow channel or the cam chamber securely. Specifically, the second seal suppresses leakage of the working oil having a relatively high pressure that flows through the inner flow channel (the first inner flow channel and the second inner flow channel), and the first seal prevents leakage of the working oil having a relatively low pressure that has leaked from the second seal and the oil having a relatively low pressure inside the cam chamber. As described above, the first seal prevents leakage of oil having a relatively low pressure while the dual sealing structure constituted by the first seal and the second seal prevents leakage of oil having a relatively high pressure, which makes it possible to prevent oil leakage securely even if the hydraulic machine of radial-piston type undergoes elastic deformation.
(2) In some embodiments, in the above configuration (1), the at least one first seal includes a liquid gasket for filling the gap, and the second seal includes an O-ring which surrounds the opening end of the first inner flow channel and the opening end of the second inner flow channel.
   With the above configuration (2), since the first seal includes a liquid gasket for filling the gap, it is possible to maintain the performance of the first seal to contact the gap closely at a high level. Further, since a liquid gasket has a high filling performance and is easy to fabricate, it is possible to reconstruct the first seal easily when the cylinder block is removed temporarily upon repair or maintenance of the hydraulic machine and then returned to the original position.
   Further, since the second seal includes an O ring that surrounds the opening end of the first inner flow channel and the opening end of the second inner flow channel, it is possible to secure high sealing performance and to restrict leakage of working oil securely even when the working oil has a relatively high pressure. Further, the second seal is not exposed to the surface of the stationary part but is disposed inside the stationary part. Thus, the second seal hardly falls off from the gap due to elastic deformation of the hydraulic machine of radial-piston type.
(3) In the above configuration (1), a recessed groove is formed on the at least one end plate and the cylinder block, the recessed groove extending in the circumferential direction along a joint line between the at least one end plate and the cylinder block so that the gap between the at least one end plate and the cylinder block has an opening into a groove bottom of the recessed groove, and the at least one first seal is disposed in the recessed groove.
   With the above configuration (3), the first seal is disposed inside the recessed groove extending in the circumferential direction along the joint line between the at least one end plate and the cylinder block. Specifically, the first seal is disposed on an end of the gap so as to be exposed to the external space of the at least one end plate and the cylinder block. In this way, the first seal can be constructed easily, and it is possible to prevent oil from leaking out to the external space via the gap securely.
(4) In one embodiment, in the above configuration (3), the at least one first seal includes: a base seal disposed in the recessed groove so as to be in close contact with the groove bottom of the recessed groove into which the gap has an opening, the base seal including a thinning region in which a thickness in the axial direction decreases with distance from the groove bottom; and a cover seal disposed in the recessed groove so as to cover the base seal.
   With the above configuration (4), when the first seal is to be constructed, it is possible to fill the recessed groove with the first seal without leaving clearance in the width direction by pressing the cover seal from above while the base seal is in close contact with the groove bottom of the recessed groove so as to overlap the cover seal and the base seal in the axial direction (the width direction of the recessed groove) in the thinning region of the base seal. As a result, it is possible to improve the sealing performance of the first seal.
(5) In one embodiment, in the above configuration (4), the base seal is a solid seal which has a solid form at the time of installation to the recessed groove, and the cover seal is a liquid gasket which has a liquid form at the time of installation to the recessed groove.
   With the above configuration (5), the first seal is formed by combination of a solid seal and a liquid gasket, which makes it possible to reduce the used amount of liquid gasket, and thus to reduce the fabrication time of the first seal (e.g. time for drying the liquid gasket). In the above first seal, the liquid gasket is disposed outside the solid seal. Thus, it is possible to improve the performance of the first seal to contact the gap closely, which makes it possible to prevent the first seal from falling off from the gap even when the hydraulic machine of radial-piston type undergoes elastic deformation.
(6) In some embodiments, in the above configuration (2) or (5), the at least one first seal further includes a lid member disposed so as to cover the liquid gasket.
(7) In one embodiment, in the above configuration (6), the lid member includes a rubber sheet bonded to the liquid gasket.
   With the above configuration (6) or (7), it is possible to bond the lid member to the gap using the liquid gasket, which makes it possible to improve the sealing performance of the first seal. Further, since the liquid gasket is covered by the lid member including a rubber sheet, it is possible to prevent damage to the liquid gasket from the external space.
(8) In some embodiments, in any one of the above configurations (1) to (7), the hydraulic machine of radial-piston type further includes a retaining plate disposed so as to cover the at least one first seal and fastened to at least one of the cylinder block or the at least one end plate.
   With the above configuration (8), it is possible to fix the first seal to the cylinder block or the at least one end plate securely using the retaining plate, which makes it possible to prevent the first seal from falling off from the gap even if the hydraulic machine of radial-piston type undergoes elastic deformation.
(9) In the configuration (1), the cylinder block includes a plurality of segments divided in the circumferential direction, and the hydraulic machine of radial-piston type further includes a third seal disposed in the axial direction so as to fill a gap between a pair of segments arranged adjacently in the circumferential direction among the plurality of segments.
   With the above configuration (9), since the hydraulic machine of radial-piston type further includes the third seal disposed in the axial direction so as to fill the gap between the adjacent segments, it is possible to prevent oil leakage to the external space securely also in a case where the cylinder block of the hydraulic machine is divided in the circumferential direction.
(10) In some embodiments, in any one of the above configurations (1) to (9), the at least one end plate includes end plates disposed on either side of the cylinder block in the axial direction, and the at least one first seal includes a pair of first seals disposed in the circumferential direction so as to fill gaps between the end plates and respective ends of the cylinder block.
   With the above configuration (10), the pair of first seals fill a pair of gaps respectively formed by the cylinder block and the pair of the end plates disposed on either side of the cylinder block. In this way, it is possible to prevent oil leakage at the gap corresponding to each of the end plates securely.
(11) In some embodiments, in any one of the above configurations (1) to (10), the hydraulic machine of radial-piston type further includes a rotation shaft to which the cam is mounted and which rotates together with the cam, and an oil seal for sealing a gap between the rotation shaft and the at least one end plate.
   With the above configuration (11), it is possible to prevent oil in the cam chamber from leaking out from the gap between the outer circumferential surface of the rotation shaft in the rotational state and the at least one end plate in the stationary state.
(12) In some embodiments, in any one of the above configurations (1) to (11), the hydraulic machine of radial-piston type further includes a high-pressure oil channel communicating with the working chambers and a low-pressure oil channel through which working oil flows, the working oil having a lower pressure in the low-pressure oil channel than in the high-pressure oil channel. At least a part of the high-pressure oil channel is formed by the first inner flow channel and the second inner flow channel.
   While the high-pressure working oil flowing through the high-pressure oil channel has a great risk of oil leakage, with the above configuration (12), at least a part of the high-pressure oil channel is formed inside the cylinder block and the at least one end plate, which makes it possible to achieve a configuration with less possibility of oil leakage as compared to a case where the high-pressure oil channel is formed in a pipe exposed to the external space. Further, with the first seal and the second seal disposed as described above in the gap to which the first inner flow channel and the second inner flow channel communicate, it is possible to prevent leakage of the high-pressure working oil even more securely.
(13) In one embodiment, in the above configuration (12), the hydraulic machine of radial-piston type further includes at least one accumulator for suppressing pulsation in the low-pressure oil channel, the accumulator communicating with the low-pressure oil channel.
   With the above configuration (13), since the at least one accumulator is provided so as to communicate with the low-pressure oil channel to restrict pulsation in the low-pressure oil channel, it is possible to restrict elastic deformation of the hydraulic machine of radial-piston type, which makes it possible to reduce the risk of oil leakage even further.
(14) A wind turbine generator according to at least some embodiments of the present invention includes: a rotor configured to rotate by receiving wind; a hydraulic pump configured to be driven by the rotor to produce pressurized oil; and a hydraulic motor configured to be driven by the pressurized oil. The hydraulic pump is the hydraulic machine of radial-piston type according to any one of the above configurations (1) to (13).
   With the above wind turbine generator (14), since the radial-piston hydraulic machine capable of securely preventing oil leakage is provided as described above, it is possible to reduce influence on the environment and achieve stable operation.
(15) A method of providing a seal according to at least some embodiments of the present invention is for a hydraulic machine of radial-piston type which includes: a plurality of pistons arranged in a circumferential direction of the hydraulic machine; a cylinder block in which a plurality of cylinders for guiding the respective pistons reciprocably along a radial direction of the hydraulic machine is formed; a cam disposed in a cam chamber located radially inside or outside the cylinder block so as to face the plurality of pistons; at least one end plate disposed adjacently to the cylinder block in the axial direction of the hydraulic machine, the at least one end plate forming a stationary part of the hydraulic machine together with the cylinder block; a first inner flow channel communicating with working chambers formed by the pistons and the cylinders, the first inner flow channel being disposed inside the cylinder block so as to have an opening into a gap between the cylinder block and the at least one end plate, the gap communicating with the cam chamber; and a second inner flow channel having an opening end facing an opening end of the first inner flow channel via the gap, the second inner flow channel being disposed inside the at least one end plate so as to communicate with the first inner flow channel via the gap. The method includes: a step of filling the gap between the cylinder block and the at least one end plate with a first seal which extends along the circumferential direction of the hydraulic machine; and a step of placing a second seal in the gap between the cylinder block and the at least one end plate so as to surround the opening end of the first inner flow channel and the opening end of the second inner flow channel.

In the above method of providing a seal (15), the first seal extending in the circumferential direction of the hydraulic machine is used to fill the gap between the cylinder block and the at least one end plate, and the second seal is disposed inside the gap between the cylinder block and the at least one end plate so as to surround the opening end of the first inner flow channel and the opening end of the second inner flow channel. In this way, even if the hydraulic machine of radial-piston type undergoes elastic deformation, it is possible to provide a sealing structure whereby it is possible to prevent oil leakage from the inner flow channel or the cam chamber securely.

According to at least one embodiment of the present invention, the first seal is disposed in the circumferential direction of the hydraulic machine so as to fill the gap between the cylinder block and the at least one end plate, and the second seal is disposed inside the gap between the cylinder block and the at least one end plate so as to surround the opening end of the first inner flow channel and the opening end of the second inner flow channel. Thus, even if the hydraulic machine of radial-piston type undergoes elastic deformation, it is possible to prevent oil leakage from the inner flow channel or the cam chamber securely.

### BRIEF DESCRIPTION OF DRAWINGS

FIG. 1 is an overall configuration diagram of a wind turbine generator according to one embodiment.
FIG. 2 is a schematic cross-sectional view of an upper part of a hydraulic machine of radial-piston type according to one embodiment.
FIG. 3 is a side view of a hydraulic machine of radial-piston type according to one embodiment.
FIG. 4 is a partial cross-sectional view of the hydraulic machine of radial-piston type illustrated in FIG. 3, taken in the radial direction (as seen in the direction of arrow A in FIG. 3).
FIG. 5 is a planar view illustrating a sealing structure, a cylinder block and end plates according to one embodiment (as seen in the direction of arrow B in FIG. 4).
FIG. 6 is a cross-sectional view of the sealing structure and the cylinder block according to one embodiment, taken in the radial direction (as seen in the direction of arrow C in FIG. 5).
FIG. 7 is a cross-sectional view of the sealing structure and the cylinder block according to one embodiment, taken in the radial direction (as seen in the direction of arrow D in FIG. 5).
FIG. 8 is a cross-sectional view of the first seal according to one embodiment (as seen in the direction of arrow E in FIG. 5).
FIG. 9 is a cross-sectional view of the first seal according to another embodiment (as seen in the direction of arrow E in FIG. 5).

### DETAILED DESCRIPTION

Embodiments of the present invention will now be described in detail with reference to the accompanying drawings.

In the present embodiment, a hydraulic pump of a wind turbine generator will be described as an example of a hydraulic machine of radial-piston type. However, application of the hydraulic machine of radial-piston type according to the present embodiment is not limited to a hydraulic pump for a wind turbine generator, and the hydraulic machine of radial-piston type according to the present invention may be applied to a hydraulic motor of a wind turbine generator, or apparatuses other than a wind turbine generator such as an industrial vehicle, an industrial machine, and a device for a ship.

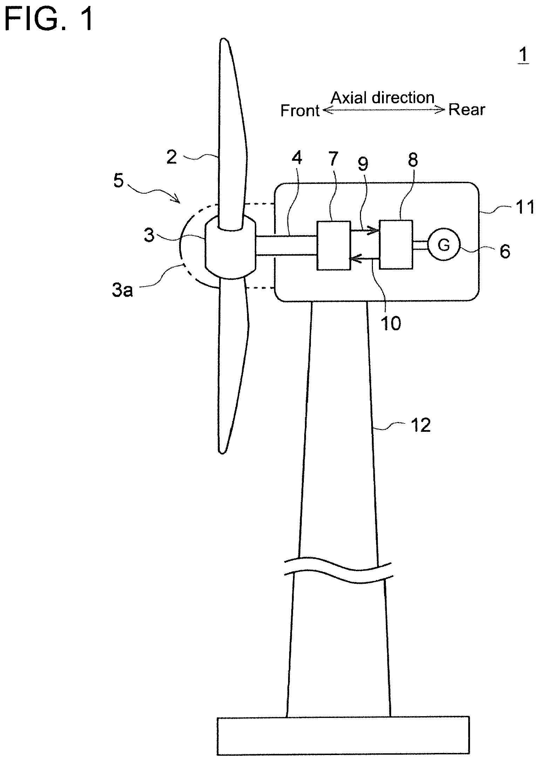

Firstly, with reference to FIG. 1, the overall configuration of a wind turbine generator 1 according to one embodiment will be described. FIG. 1 is an overall configuration diagram of a wind turbine generator 1 according to one embodiment.

As illustrated in FIG. 1, the wind turbine generator 1 according to one embodiment includes a rotor 5 including at least one blade 2, a hub 3 to which the at least one blade 2 is mounted in a radial fashion, and a rotation shaft 4 configured to be capable of rotating integrally with the hub 3. The hub 3 may be covered by a hub cover 3a. The rotor 5 is supported rotatably to a nacelle 11 via a main bearing. The nacelle 11 is mounted to an upper end portion of a tower 12 disposed on ocean or on land.

A hydraulic pump (hydraulic machine of radial-piston type) 7 is connected to the rotor 5 via the rotation shaft 4. A hydraulic motor 8 is connected to the hydraulic pump 7 via a high-pressure oil line 9 and a low-pressure oil line 10. Specifically, an outlet of the hydraulic pump 7 is connected to an inlet of the hydraulic motor 8 via the high-pressure oil line 9, and an inlet of the hydraulic pump 7 is connected to an outlet of the hydraulic motor 8 via the low-pressure oil line 10. The hydraulic pump 7 is driven by the rotation shaft 4 to increase the pressure of working oil, thereby producing high-pressure working oil (pressurized oil). The pressurized oil produced by the hydraulic pump 7 is supplied to the hydraulic motor 8 via the high-pressure oil line 9, and drives the hydraulic motor 8. The low-pressure working oil having performed work in the hydraulic motor 8 is returned again to the hydraulic pump 7 via the low-pressure oil line 10 disposed between the outlet of the hydraulic motor 8 and the inlet of the hydraulic pump 7.

The generator 6 is connected to the hydraulic motor 8. For instance, the generator 6 is a synchronous generator connected to a utility grid and driven by the hydraulic motor 8.

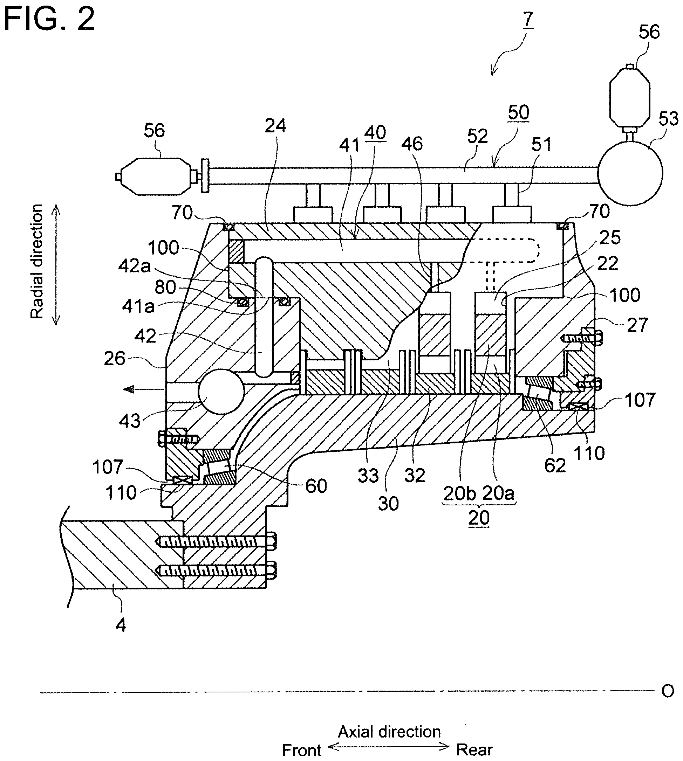

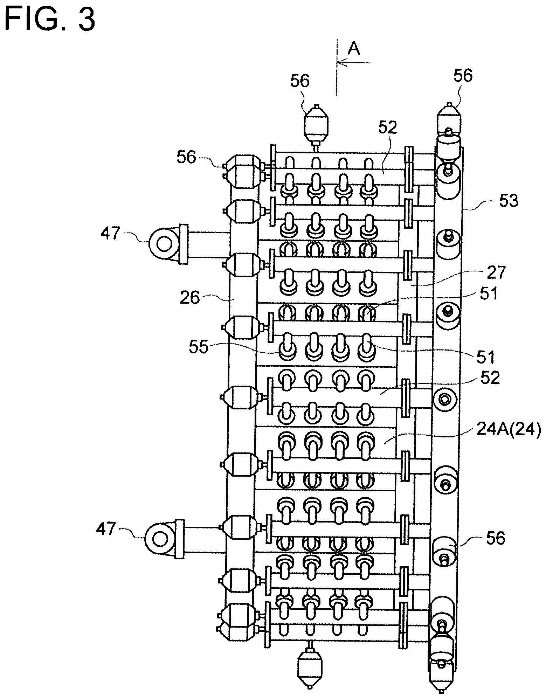

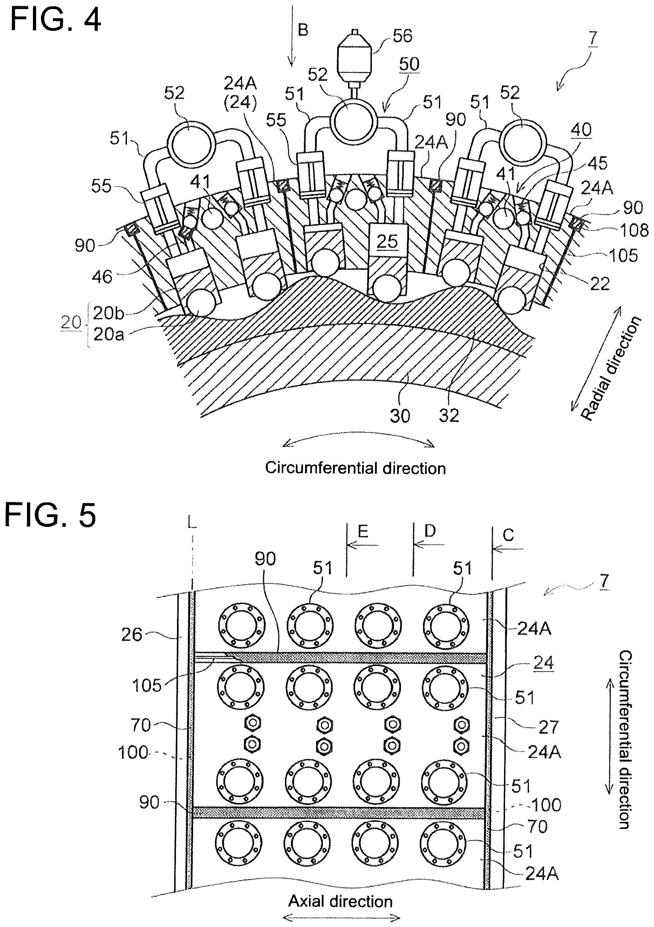

Next, with reference to FIGs. 2 to 5, a hydraulic machine of radial-piston type (for example, a hydraulic pump) 7 according to one embodiment will be described. FIG. 2 is a schematic cross-sectional view of an upper part of the hydraulic machine of radial-piston type 7 according to one embodiment. In FIG. 2, illustrated is only the upper half section of a cross section of the hydraulic machine of radial-piston type 7 taken along the axial direction. FIG. 3 is a side view of the hydraulic machine of radial-piston type 7 according to one embodiment. FIG. 4 is a side view of the hydraulic machine of radial-piston type 7 illustrated in FIG. 3 (as seen in the direction of arrow A). FIG. 5 is a planar view illustrating a sealing structure, a cylinder block and end plates according to one embodiment (as seen in the direction of arrow B in FIG. 4).

As illustrated in FIGs. 2, 5 and 6, the hydraulic machine of radial-piston type (hereinafter, referred to merely as a hydraulic machine) 7 according to one embodiment includes a plurality of pistons 20 arranged in the circumferential direction, a cylinder block 24 in which a plurality of cylinders 22 is formed, a cam 32 disposed so as to face the plurality of pistons 20, end plates 26, 27 disposed adjacently to the cylinder block 24 in the axial direction, the first inner flow channel disposed inside the cylinder block, and the second inner flow channel disposed inside the end plates. Further, an input shaft or an output shaft of the hydraulic machine 7 is directly connected to the cam shaft 30 of the hydraulic machine 7, and the cam shaft 30 rotates together with the input shaft or the output shaft of the hydraulic machine 7.

Here, in the present embodiment, "circumferential direction", "radial direction", and "axial direction", are the circumferential direction, the radial direction, and the axial direction of the hydraulic machine 7, respectively.

Specifically, the plurality of pistons 20 is arranged in a radial fashion on the outer side, in the radial direction, of the cam 32. In one configuration example, each piston 20 includes a roller 20a contacting the cam surface of the cam 32, and a piston body 20b supporting the roller 20a rotatably. The piston body 20b is disposed so as to slide inside corresponding one of the cylinders 22 formed in the cylinder block 24. In another configuration example, each piston 20 includes a ball instead of the roller 20a, and a piston body supporting the ball rotatably.

The plurality of cylinders 22 formed in the cylinder block 24 is for guiding the respective pistons 20 reciprocably along the radial direction. In the configuration example in the drawings, the cylinder block 24 is disposed on the outer side of the cam 32 in the radial direction, and arranged so as to extend in an annular shape over the entire circumference of a cam shaft 30. In another configuration example which is not illustrated, the cylinder block 24 is disposed on the inner side of the cam 32 in the radial direction, and arranged so as to extend in an annular shape over the entire circumference of the cam shaft 30. Further, the cylinder block 24 may include a plurality of segments 24A divided in the circumferential direction.

The cylinders 22 formed inside the cylinder block 24 and the pistons 20 reciprocating inside the cylinders 22 together form working chambers 25.

The cam 32 is disposed so as to face the pistons 20 inside a cam chamber 33 that is located radially inside or outside the cylinder block 24. The cam 32 is fixed to the outer circumference of the cam shaft 30 which rotates along with the rotation shaft 4. Further, the cam 32 may be a ring cam forming a cam surface of a wavy shape that continues along the circumferential direction, disposed in an annular shape so as to surround the entire periphery of the cam shaft 30. A plurality of cams 32 may be disposed to form rows in the axial direction. The cam 32 is not limited to one having a cam surface of a wavy shape, but may have a cam surface of an eccentric cam which has a single cam surface with the center of the cam 32 offset from the center position of the shaft.

The end plates 26, 27 are disposed adjacent to the cylinder block 24 in the axial direction, and form a stationary part of the hydraulic machine 7 with the cylinder block 24. In the illustrated example, the end plates 26, 27 include the first end plate 26 and the second end plate 27 disposed on either side of the cylinder block 24 in the axial direction. Further, the first end plate 26 and the second end plate 27 may be formed in a substantially disc shape. In one configuration example, the first end plate 26 is disposed on the front side in the axial direction, and the second end plate 27 is disposed on the rear side in the axial direction. In the present embodiment, the front side is a side close to the hub 3 in the axial direction as illustrated in FIG. 1, and the rear side is a side remote from the hub 3 in the axial direction as illustrated in FIG. 1.

The first gap 100 is formed between the cylinder block 24 and the end plates 26, 27 (in the illustrated example, between the cylinder block 24 and the first end plate 26). The first gap 100 communicates with the working chambers 25 and the cam chamber 33.

The first inner flow channel 41 is disposed inside the cylinder block 24 so as to have an opening to the first gap 100.

The second inner flow channel 42 has an opening end 42a facing an opening end 41a of the first inner flow channel 41 via the first gap 100, and is disposed inside the end plates 26, 27 so as to communicate with the first inner flow channel 41 via the first gap 100.

In the configuration example illustrated in the drawing, the first inner flow channel 41 extends in the axial direction inside the cylinder block 24, and the second inner flow channel 42 extends in the radial direction inside the first end plate 26. In this case, the opening end 41a of the first inner flow channel 41 and the opening end 42a of the second inner flow channel 42 are formed on a plane orthogonal to the radial direction, and the first gap 100 extends in the radial direction so as to have a step at the opening end 41a and the opening end 42a.

In another configuration example not illustrated in the drawing, the first inner flow channel 41 extends in the axial direction inside the cylinder block 24, and the second inner flow channel 42 may include a section extending in the radial direction and a section extending in the axial direction. In this case, the first inner flow channel 41 is connected to the section of the second inner flow channel 42 which extends in the radial direction. Further, the opening end 41a of the first inner flow channel 41 and the opening end 42a of the second inner flow channel 42 are formed on a plane along the radial direction, and the first gap 100 extends in the radial direction linearly so as to pass through the opening end 41a and the opening end 42a.

In one configuration example, the inner flow channel 40 including the first inner flow channel 41 and the second inner flow channel 42 is a high-pressure oil channel through which high-pressure working oil (high-pressure oil) flows. The high-pressure oil channel 40 may include a high-pressure oil communication channel 46, the first inner flow channel 41, the second inner flow channel 42, and a high-pressure oil manifold 43.

In this configuration, as illustrated in FIG. 4, the first inner flow channel 41 is connected to the high-pressure oil communication channel 46 communicating with the working chamber 25. The high-pressure oil communication channel 46 extends in the radial direction. A high-pressure valve 45 for switching the communication state between the working chamber 25 and the first inner flow channel 41 is disposed in the high-pressure oil communication channel 46. The second inner flow channel 42 is connected to the first inner flow channel 41 at one end, and connected to the high-pressure oil manifold 43 at the other end. The high-pressure oil manifold 43 is formed to have an annular shape inside the first end plate 26, and a plurality of second inner flow channels 42 is connected to the high-pressure oil manifold 43.

Further, in this configuration, a low-pressure oil channel 50 may include a low-pressure oil communication channel 51, a low-pressure oil pipe 52, and a low-pressure oil manifold 53.

The low-pressure oil communication channel 51 extends in the radial direction, and the low-pressure oil communication channel 51 is connected to the working chamber 25 at one end and to the low-pressure oil pipe 52 extending in the axial direction at the other end. For instance, as illustrated in the drawing, two low-pressure oil communication channels 51 extending from respective two of the working chambers disposed adjacent to each other in the circumferential direction are connected to the low-pressure oil pipe 52. A low-pressure valve 55 for switching the communication state between the working chamber 25 and the low-pressure oil pipe 52 is disposed in the low-pressure oil communication channel 51. The low-pressure oil pipe 52 is coupled to the low-pressure oil manifold 53 at one end. The low-pressure oil manifold 53 is formed to have an annular shape, and a plurality of low-pressure oil pipes 52 is connected to the low-pressure oil manifold 53.

In one configuration example, in a case where the cylinder block 24 includes the plurality of segments 24A, each of the segments 24A may include at least one cylinder 22, at least one high-pressure oil channel 40, and at least one low-pressure oil channel 50 communicating with at least one working chamber 25 in the at least one cylinder 22, formed therein.

Further, bearings 60, 62 are disposed between the cam shaft 30 and the first end plate 26 or the second end plate27 so as to support the cam shaft 30 rotatably with respect to the first end plate 26 or the second end plate 27.

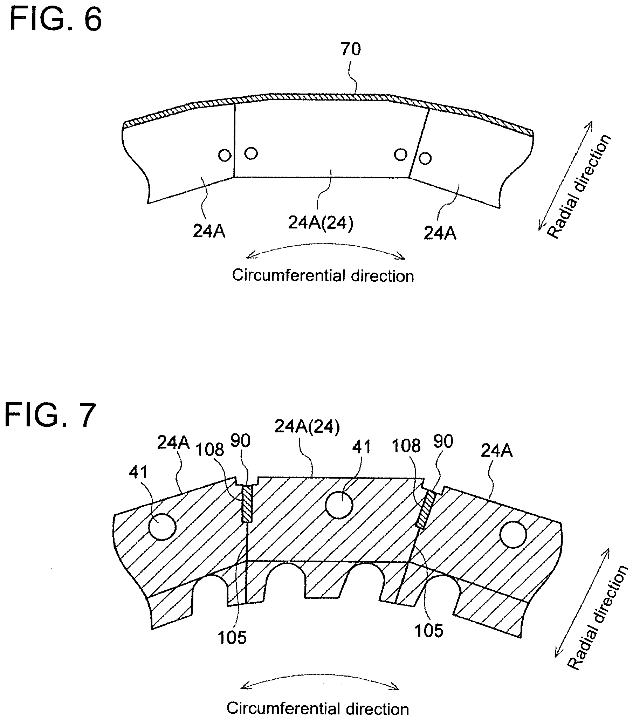

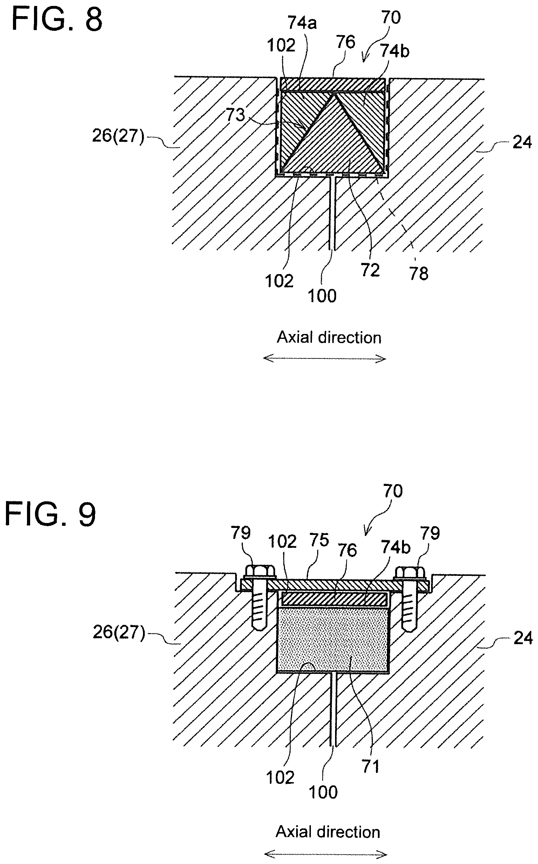

The hydraulic machine 7 having the above configuration has a sealing structure illustrated in FIGs. 2 to 9 to prevent oil leakage. FIG. 6 is a cross-sectional view of the sealing structure and the cylinder block 24 according to one embodiment, taken in the radial direction (as seen in the direction of arrow C in FIG. 5). FIG. 7 is a cross-sectional view of the sealing structure and the cylinder block 24 according to one embodiment, taken in the radial direction (as seen in the direction of arrow D in FIG. 5). FIG. 8 is a cross-sectional view of the first seal 70 according to one embodiment (as seen in the direction of arrow E in FIG. 5). FIG. 9 is a cross-sectional view of the first seal 70 according to another embodiment (as seen in the direction of arrow E in FIG. 5).

As illustrated in FIGs. 2 to 5, the hydraulic machine 7 illustrated in one embodiment includes the first seal 70 disposed in the circumferential direction so as to fill the first gap 100 between the cylinder block 24 and the end plates 26, 27, and the second seal 80 disposed inside the first gap 100 between the cylinder block 24 and the end plates so as to surround the opening end 41a of the first inner flow channel 41 and the opening end 42a of the second inner flow channel 42.

As described above, the stationary part of the hydraulic machine 7 has a dividable structure including at least the cylinder block 24 and the end plates 26, 27 disposed adjacently to the cylinder block 24. In such dividable structure, a gap (the first gap 100) may be formed between the cylinder block 24 and the end plates 26, 27. On the other hand, the inner flow channel 40 (the first inner flow channel 41 and the second inner flow channel 42) through which the working oil flows extends so as to straddle the cylinder block 24 and the end plates 26, 27, while the cam chamber 33 that is to be filled with oil is surrounded by the cylinder block 24 and the end plates 26, 27. Thus, the inner flow channel 40 and the cam chamber 33 communicate with the first gap 100. In such configuration, if the hydraulic machine 7 undergoes elastic deformation due to various stresses, for instance, the risk of oil leakage via the first gap 100 becomes high.

Thus, the above hydraulic machine 7 includes the first seal 70 disposed in the circumferential direction so as to fill the first gap 100 between the cylinder block 24 and the end plates 26, 27, and the second seal 80 disposed inside the first gap 100 between the cylinder block 24 and the end plates 26, 27 so as to surround the opening end 41a of the first inner flow channel 41 and the opening end 42a of the second inner flow channel 42. In this way, even if the hydraulic machine 7 undergoes elastic deformation due to various stresses, it is possible to prevent oil leakage from the inner flow channel 40 or the cam chamber 33 securely. Specifically, the second seal 80 suppresses leakage of the working oil having a relatively high pressure that flows through the inner flow channel 40 (the first inner flow channel 41 and the second inner flow channel 42), and the first seal 70 prevents leakage of the working oil having a relatively low pressure that has leaked from the second seal 80 and the oil having a relatively low pressure inside the cam chamber 33. As described above, the first seal 70 prevents leakage of oil having a relatively low pressure while the dual sealing structure constituted by the first seal 70 and the second seal 80 prevents leakage of oil having a relatively high pressure, which makes it possible to prevent oil leakage securely even if the hydraulic machine 7 undergoes elastic deformation. The cam chamber 33 is normally connected to a drain and maintained to have a relatively low pressure substantially equivalent to the atmospheric pressure. Further, a region of the first gap 100 that is adjacent to the external space with respect to the second seal 80 has a pressure lower than that in the inner flow channel 40.

In one embodiment, the first seal 70 includes a liquid gasket for closing the first gap 100, and the second seal 80 includes an O ring that surrounds the opening end 41a of the first inner flow channel 41 and the opening end 42a of the second inner flow channel 42.

With this configuration, since the first seal 70 includes a liquid gasket for filling a gap, it is possible to maintain the performance of the first seal 70 to contact a gap closely at a high level. Further, since a liquid gasket has a high filling performance and is easy to fabricate, it is possible to reconstruct the first seal 70 easily when the cylinder block is removed temporarily upon repair or maintenance of the hydraulic machine and then returned to the original position.

Further, since the second seal 80 includes an O ring that surrounds the opening end 41a of the first inner flow channel 41 and the opening end 42a of the second inner flow channel 42, it is possible to secure high sealing performance and to restrict leakage of working oil securely even when the working oil has a relatively high pressure. Further, the second seal 80 is not exposed to the surface of the stationary part but is disposed inside the stationary part. Thus, the second seal 80 hardly falls off from the gap due to elastic deformation of the hydraulic machine 7.

As illustrated in FIGs. 5 and 8, in one embodiment, a recessed groove 102 is formed on the end plates 26, 27 and the cylinder block 24 that extends in the circumferential direction along a joint line L between the end plates 26, 27 and the cylinder block 24 so that the first gap 100 between the end plates 26, 27 and the cylinder block 24 has an opening into a groove bottom 103, with the first seal 70 being disposed inside the recessed groove 102. For instance, the recessed groove 102 may have a cross section of a rectangular shape or an upside-down triangular shape so that the first seal 70 that is to be filled inside can be made easily. Alternatively, the recessed groove 102 may have a U-shaped cross section.

With the above configuration, the first seal 70 is disposed inside the recessed groove 102 extending in the circumferential direction along the joint line L between the end plates 26, 27 and the cylinder block 24. Specifically, the first seal 70 is disposed on an end of the first gap 100 so as to be exposed to the external space of the end plates 26, 27 and the cylinder block 24. In this way, the first seal 70 can be constructed easily, and it is possible to prevent oil from leaking out to the external space via the first gap 100 securely.

As illustrated in FIG. 8, in one embodiment, the first seal 70 includes a base seal 72 and cover seals 74a, 74b.

The base seal 72 has a thinning region 73 disposed in the recessed groove 102 so as to closely contact the groove bottom 103 of the recessed groove 102 into which the first gap 100 has an opening, the thinning region 73 having a thickness, in the axial direction, that decreases with distance from the groove bottom 103. The thinning region 73 may be formed in a tapered shape where the sides are inclined with respect to the axial direction. Further, the base seal 72 may be formed to have a cross section of an upside-down triangular shape in the axial direction.

The cover seals 74a, 74b are disposed inside the recessed groove 102 so as to cover the base seal 72. While there are two or more cover seals 74a, 74b in the illustrated example, there may be one cover seal provided.

The base seal 72 or the cover seals 74a, 74b may be bonded to the recessed groove 102 by an adhesive agent 78 that is applied to the inner wall surface of the recessed groove 102 including the groove bottom 103. The base seal 72 and the cover seals 74a, 74b may be bonded to each other by an adhesive agent applied to contact surfaces.

With the above configuration, when the first seal 70 is to be constructed, it is possible to fill the recessed groove 102 with the first seal 70 without leaving clearance in the width direction by pressing the cover seals 74a, 74b from above while the base seal 72 is in close contact with the groove bottom 103 of the recessed groove 102 so as to overlap the cover seals 74a, 74b and the base seal 72 in the axial direction (the width direction of the recessed groove) in the thinning region 73 of the base seal 72. As a result, it is possible to improve the sealing performance of the first seal 70.

Further, the base seal 72 may be a solid seal that is in a solid form when being installed onto the recessed groove 102. The cover seals 74a, 74b may be the liquid gasket 71 that is in a liquid form when being installed onto the recessed groove 102.

With the above configuration, the first seal 70 is formed by combination of a solid seal and a liquid gasket, which makes it possible to reduce the used amount of liquid gasket, and thus to reduce the fabrication time of the first seal 70 (e.g. time for drying the liquid gasket). In the above first seal 70, the liquid gasket is disposed outside the solid seal. Thus, it is possible to improve the performance of the first seal 70 to contact the gap closely, which makes it possible to prevent the first seal 70 from falling off from the gap even when the hydraulic machine of radial-piston type undergoes elastic deformation.

In one embodiment, the first seal 70 includes a lid member 76 disposed so as to cover the liquid gasket 71.

The lid member 76 may include a rubber sheet that is to be bonded to the liquid gasket 71.

With the above configuration, it is possible to bond the lid member 76 to the first gap 100 using the liquid gasket 71, which makes it possible to improve the sealing performance of the first seal 70. Further, since the liquid gasket 71 is covered by the lid member 76 including a rubber sheet, it is possible to prevent damage to the liquid gasket 71 from the external space.

As illustrated in FIG. 9, in another embodiment, the hydraulic machine 7 further includes a retaining plate 75 which is disposed so as to cover the first seal 70 and which is fastened to at least one of the cylinder block 24 or the end plates 26, 27. The retaining plate 75 is fastened to at least one of the cylinder block 24 or the end plates 26, 27 by e.g. bolts 79. Further, the retaining plate 75 may be configured to cover the lid member 76 disposed on the surface of the liquid gasket.

With the above configuration, it is possible to fix the first seal 70 to the cylinder block 24 or the end plates 26, 27 securely using the retaining plate 75, which makes it possible to prevent the first seal 70 from falling off from the first gap 100 even if the hydraulic machine 7 undergoes elastic deformation.

Further, in the above configuration, when the first seal 70 is to be constructed, an adhesive agent is applied to at least one of the groove bottom 103 or the base seal 72, and then the base seal 72 is inserted into the recessed groove 102 so as to contact the groove bottom 103 closely, and thereby the base seal 72 is bonded to the groove bottom 103. Next, the cover seals 74a, 74b may be pressed into the recessed groove 102 so as to contact the base seal 72 closely after an adhesive agent is applied to at least one of the base seal 72 or the cover seals 74a, 74b.

As illustrated in FIGs. 5 and 7, in one embodiment, in a case where the cylinder block 24 includes a plurality of segments 24A divided in the circumferential direction, the hydraulic machine 7 further includes the third seal 90 disposed in the axial direction so as to fill the second gap 105 between two of the segments 24A arranged adjacently in the circumferential direction.

With the above configuration, since the hydraulic machine 7 further includes the third seal 90 disposed in the axial direction so as to fill the second gap 105 between the adjacent segments 24A, it is possible to prevent oil leakage to the external space securely also in a case where the cylinder block 24 of the hydraulic machine 7 is divided in the circumferential direction. The third seal 90 may have a configuration similar to that of the first seal 70 illustrated in FIGs. 8 and 9.

In a case where the first end plate 26 and the second end plate 27 are disposed on either side of the cylinder block 24 in the axial direction, a pair of first seals 70 may be disposed in the circumferential direction so as to fill gaps between the first end plate 26 and the second end plate 27 and respective ends of the cylinder block 24.

With this configuration, the pair of first seals 70 fill a pair of first gaps 100 respectively formed by the cylinder block 24 and the pair of the first end plate 26 and the second end plate 27 disposed on either side of the cylinder block 24. In this way, it is possible to prevent oil leakage at the first gap 100 corresponding to each of the end plates 26, 27 securely.

As illustrated in FIG. 2, in one embodiment, the hydraulic machine 7 further includes an oil seal 110 for sealing the third gap 107 disposed between the rotation shaft 4 (cam shaft 30) and the end plates 26, 27. In the illustrated example, a pair of oil seals 110 is disposed on either side of the cam 32 in the axial direction.

With the above configuration, it is possible to prevent oil in the cam chamber 33 from leaking out from the third gap 107 between the outer circumferential surface of the rotation shaft 4 (cam shaft 30) in the rotational state and the end plates 26, 27 in the stationary state.

As illustrated in FIGs. 2 to 4, in one embodiment, the hydraulic machine 7 further includes at least one low-pressure accumulator 56, disposed so as to communicate with the low-pressure oil channel 50, for restricting pulsation in the low-pressure oil channel 50. The low-pressure accumulator 56 may be connected to at least one of the low-pressure oil manifold 53, the low-pressure oil pipe 52, or the low-pressure oil communication channel 51. For instance, in the illustrated example, the low-pressure accumulator 56 is connected to the front, in the axial direction, of the low-pressure oil pipe 52, and located along the extending direction of the low-pressure oil pipe 52 so as not to interfere with the flow of the low-pressure oil in the low-pressure oil pipe 52. Further, a plurality of low-pressure accumulators 56 is connected to the low-pressure oil manifold 53 having an annular shape so as to extend radially from the rotational axis O of the rotation shaft 4 at the center. At this time, the low-pressure accumulator 56 is disposed on the outer side, in the radial direction, of the low-pressure oil manifold 53 having an annular shape.

With the above configuration, since at least one low-pressure accumulator 56 is provided so as to communicate with the low-pressure oil channel 50 to restrict pulsation in the low-pressure oil channel 50, it is possible to restrict elastic deformation of the hydraulic machine 7, which makes it possible to reduce the risk of oil leakage even further.

Here, as illustrated in FIG. 3, the hydraulic machine 7 may further include at least one high-pressure accumulator 47 communicating with the high-pressure oil channel 40. For instance, the high-pressure accumulator 47 is mounted to the first end plate 26 so as to communicate with the high-pressure oil manifold 43. The high-pressure accumulator 47 may be used to prevent pulsation of the high-pressure oil, in case of which it is possible to reduce the risk of oil leakage even further. Alternatively, the high-pressure accumulator 47 may be used to accumulate a pressure.

Next, a method of providing seal for the hydraulic machine 7 according to one embodiment will be described. In the following description, the reference signs mentioned above will be used where appropriate.

A method of providing a seal according to one embodiment is for the hydraulic machine 7.

The hydraulic machine 7 includes a plurality of pistons 20 arranged in the circumferential direction, a cylinder block 24 in which a plurality of cylinders is formed, a cam 32 disposed so as to face the plurality of pistons 20, in a cam chamber disposed radially inside or outside the cylinder block 24, end plates 26, 27 disposed adjacently to the cylinder block 24 in the axial direction so as to form the stationary part of the hydraulic machine 7 together with the cylinder block 24, the first inner flow channel 41 disposed inside the cylinder block 24 so as to and communicate with the working chambers 25 and have an opening into the first gap 100 between the cylinder block 24 and the end plate 26, 27 communicating with the cam chamber 33 and the second inner flow channel 42 disposed inside the end plates 26, 27 so as to communicate with the first inner flow channel 41 via the first gap 100, having the opening end 42a facing the opening end 41a of the first inner flow channel 41 via the first gap 100.

The method of providing a seal includes a step of filling the first gap 100 between the cylinder block 24 and the end plates 26, 27 using the first seal 70 extending in the circumferential direction, and a step of placing the second seal 80 disposed inside the first gap 100 between the cylinder block 24 and the end plates 26, 27 so as to surround the opening end 41a of the first inner flow channel 41 and the opening end 42a of the second inner flow channel 42.

In the above method of providing a seal, the first seal 70 extending in the circumferential direction is used to fill the first gap 100 between the cylinder block 24 and the end plates 26, 27, and the second seal 80 is disposed inside the first gap 100 between the cylinder block 24 and the end plates 26, 27 so as to surround the opening end 41a of the first inner flow channel 41 and the opening end 42a of the second inner flow channel 42. In this way, even if the hydraulic machine 7 undergoes elastic deformation, it is possible to provide a sealing structure whereby it is possible to prevent oil leakage from the inner flow channel 40 or the cam chamber 33 securely.

Embodiments of the present invention were described in detail above, but the present invention is not limited thereto, and various amendments and modifications may be implemented without departing from the scope of the invention as defined by the appended claims.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.
For instance, an expression of an equal state such as "same" "equal" and "uniform" shall not be construed as indicating only the state in which the feature is strictly equal, but also includes a state in which there is a tolerance or a difference that can still achieve the same function.
Further, for instance, an expression of a shape such as a rectangular shape or a cylindrical shape shall not be construed as only the geometrically strict shape, but also includes a shape with unevenness or chamfered corners within the range in which the same effect can be achieved.
On the other hand, an expression such as "comprise", "include", "have", "contain" and "constitute" are not intended to be exclusive of other components.

## Claims

1. A hydraulic machine (7) of radial-piston type, comprising:
a plurality of pistons (20) arranged in a circumferential direction of the hydraulic machine (7);
a cylinder block (24) in which a plurality of cylinders (22) for guiding the respective pistons (20) reciprocably along a radial direction of the hydraulic machine (7) is formed, the cylinder block (24) including a plurality of segments (24A) divided in the circumferential direction;
a third seal (90) disposed in the axial direction so as to fill a gap (105) between a pair of segments (24A) arranged adjacently in the circumferential direction among the plurality of segments (24A);
a cam (32) disposed in a cam chamber (33) located radially inside or outside the cylinder block (24) so as to face the plurality of pistons (20);
at least one end plate (26,27) disposed adjacent to the cylinder block (24) in an axial direction of the hydraulic machine (7), the at least one end plate (26,27) forming a stationary part of the hydraulic machine (7) together with the cylinder block (24);
a first inner flow channel (41) communicating with working chambers (25) formed by the pistons (20) and the cylinders (22), the first inner flow channel (41) being disposed inside the cylinder block (24) so as to have an opening into a gap (100) between the cylinder block (24) and the at least one end plate (26,27), the gap (100) communicating with the cam chamber (33);
a second inner flow channel (42) having an opening end (42a) which faces an opening end (41a) of the first inner flow channel (41) via the gap (100), the second inner flow channel (42) being disposed inside the at least one end plate (26,27) so as to communicate with the first inner flow channel (41) via the gap (100);
at least one first seal (70) disposed in the circumferential direction of the hydraulic machine (7) so as to fill a radial portion of the gap (100) between the cylinder block (24) and the at least one end plate (26,27) that extends in the radial direction; and
a second seal (80) disposed in the gap (100) between the cylinder block (24) and the at least one end plate (26,27) so as to surround the opening end (41a) of the first inner flow channel (41) and the opening end (42a) of the second inner flow channel (42),
wherein a recessed groove (102) is formed on the at least one end plate (26,27) and the cylinder block (24), the recessed groove (102) extending in the circumferential direction along a joint line (L) between the at least one end plate (26,27) and the cylinder block (24) so that the gap (100) between the at least one end plate (26,27) and the cylinder block (24) has an opening into a groove bottom (103) of the recessed groove (102), and
wherein the at least one first seal (70) is disposed in the recessed groove (102).

2. The hydraulic machine (7) of radial-piston type according to claim 1,
wherein the at least one first seal (70) includes a liquid gasket (71) for filling the gap (100),
wherein the second seal (80) includes an O-ring which surrounds the opening end (41a) of the first inner flow channel (41) and the opening end (42a) of the second inner flow channel (42).

3. The hydraulic machine (7) of radial-piston type according to claim 1,
wherein the at least one first seal (70) includes:
a base seal (72) disposed in the recessed groove (102) so as to be in close contact with the groove bottom (103) of the recessed groove (102) into which the gap (100) has an opening, the base seal (72) including a thinning region in which a thickness in the axial direction decreases with distance from the groove bottom (103); and
a cover seal (74a,74b) disposed in the recessed groove (102) so as to cover the base seal (72).

4. The hydraulic machine (7) of radial-piston type according to claim 3,
wherein the base seal (72) is a solid seal which has a solid form at the time of installation to the recessed groove (102), and
wherein the cover seal (74a,74b) is a liquid gasket which has a liquid form at the time of installation to the recessed groove (102).

5. The hydraulic machine (7) of radial-piston type according to claim 2 or 4,
wherein the at least one first seal (70) further includes a lid member (76) disposed so as to cover the liquid gasket (71;74a,74b).

6. The hydraulic machine (7) of radial-piston type according to claim 5,
wherein the lid member (76) includes a rubber sheet bonded to the liquid gasket (71;74a,74b).

7. The hydraulic machine (7) of radial-piston type according to any one of claims 1 to 6, further comprising a retaining plate (75) disposed so as to cover the at least one first seal (70) and fastened to at least one of the cylinder block (24) or the at least one end plate (26,27).

8. The hydraulic machine (7) of radial-piston type according to any one of claims 1 to 7,
wherein the at least one end plate (26,27) comprises end plates (26,27) disposed on either side of the cylinder block (24) in the axial direction, and
wherein the at least one first seal (70) comprises a pair of first seals (70) disposed in the circumferential direction so as to fill gaps (100) between the end plates (26,27) and respective ends of the cylinder block (24).

9. The hydraulic machine (7) of radial-piston type according to any one of claims 1 to 8, further comprising:
a rotation shaft (30) to which the cam (32) is mounted and which rotates together with the cam (32); and
an oil seal (110) for sealing a gap between the rotation shaft (30) and the at least one end plate (26,27).

10. The hydraulic machine (7) of radial-piston type according to any one of claims 1 to 9, further comprising a high-pressure oil channel (40) communicating with the working chambers (25) and a low-pressure oil channel (50) through which working oil flows, the working oil having a lower pressure in the low-pressure oil channel (50) than in the high-pressure oil channel (40),
wherein at least a part of the high-pressure oil channel (40) is formed by the first inner flow channel (41) and the second inner flow channel (42).

11. The hydraulic machine (7) of radial-piston type according to claim 10, further comprising at least one accumulator (56) for suppressing pulsation in the low-pressure oil channel (50), the accumulator (56) communicating with the low-pressure oil channel (50).

12. A wind turbine generator comprising:
a rotor (5) configured to rotate by receiving wind;
a hydraulic pump (7) configured to be driven by the rotor (5) to produce pressurized oil; and
a hydraulic motor (8) configured to be driven by the pressurized oil,
wherein the hydraulic pump (7) is the hydraulic machine of radial-piston type according to any one of claims 1 to 11.

13. A method of providing a seal for a hydraulic machine (7) of radial-piston type including:
a plurality of pistons (20) arranged in a circumferential direction of the hydraulic machine (7);
a cylinder block (24) in which a plurality of cylinders (22) for guiding the respective pistons (20) reciprocably along a radial direction of the hydraulic machine (7) is formed, the cylinder block (24) including a plurality of segments (24A) divided in the circumferential direction;
a cam (32) disposed in a cam chamber (33) located radially inside or outside the cylinder block (24) so as to face the plurality of pistons (20);
at least one end plate (26,27) disposed adjacent to the cylinder block (24) in an axial direction of the hydraulic machine (7), the at least one end plate (26,27) forming a stationary part of the hydraulic machine (7) together with the cylinder block (24);
a first inner flow channel (41) communicating with working chambers (25) formed by the pistons (20) and the cylinders (22), the first inner flow channel (41) being disposed inside the cylinder block (24) so as to have an opening into a gap (100) between the cylinder block (24) and the at least one end plate (26,27), the gap (100) communicating with the cam chamber (33); and
a second inner flow channel (42) having an opening end (42a) which faces an opening end (41a) of the first inner flow channel (41) via the gap (100), the second inner flow channel (42) being disposed inside the at least one end plate (26,27) so as to communicate with the first inner flow channel (41) via the gap (100);
the method comprising:
a step of filling a radial portion of the gap (100) between the cylinder block (24) and the at least one end plate (26,27) which extends in the radial direction with a first seal (70) which extends along the circumferential direction of the hydraulic machine (7);
a step of placing a second seal (80) in the gap (100) between the cylinder block (24) and the at least one end plate (26,27) so as to surround the opening end (41a) of the first inner flow channel (41) and the opening end (42a) of the second inner flow channel (42); and
disposing a third seal (90) in the axial direction so as to fill a gap (105) between a pair of segments (24A) arranged adjacently in the circumferential direction among the plurality of segments (24A),
wherein a recessed groove (102) is formed on the at least one end plate (26,27) and the cylinder block (24), the recessed groove (102) extending in the circumferential direction along a joint line (L) between the at least one end plate (26,27) and the cylinder block (24) so that the gap (100) between the at least one end plate (26,27) and the cylinder block (24) has an opening into a groove bottom (103) of the recessed groove (102), and
wherein the first seal (70) is disposed in the recessed groove (102).

## Patentansprüche

1. Eine Radialkolben-Hydraulikmaschine (7) mit:
einer Vielzahl von Kolben (20), die in einer Umfangsrichtung der Hydraulikmaschine (7) angeordnet sind,
einem Zylinderblock (24), in dem eine Vielzahl von Zylindern (22) zum Führen der jeweiligen Kolben (20) hin-undher entlang einer Radialrichtung der Hydraulikmaschine (7) ausgebildet ist, wobei der Zylinderblock (24) eine Vielzahl von Segmenten (24A) aufweist, die in der Umfangsrichtung unterteilt sind,
einer dritten Dichtung (90), die in der Axialrichtung so angeordnet ist, dass sie einen Zwischenraum (105) zwischen einem Paar von Segmenten (24A), die von der Vielzahl von Segmenten (24A) nebeneinander in der Umfangsrichtung angeordnet sind, ausfüllt,
einem Nocken (32), der in einer Nockenkammer (33) angeordnet ist, die sich radial innerhalb oder außerhalb des Zylinderblocks (24) so befindet, dass er der Vielzahl von Kolben (20) zugewandt ist,
zumindest einer Endplatte (26,27), die angrenzend an den Zylinderblock (24) in einer Axialrichtung der Hydraulikmaschine (7) angeordnet ist, wobei die zumindest eine Endplatte (26,27) ein stationäres Teil der Hydraulikmaschine (7) zusammen mit dem Zylinderblock (24) bildet,
einem ersten inneren Strömungskanal (41), der mit Arbeitskammern (25) kommuniziert, die durch die Kolben (20) und die Zylinder (22) gebildet sind, wobei der erste innere Strömungskanal (41) im Inneren des Zylinderblocks (24) so angeordnet ist, dass er eine Öffnung in einen Zwischenraum (100) zwischen dem Zylinderblock (24) und der zumindest einen Endplatte (26,27) hat, wobei der Zwischenraum (100) mit der Nockenkammer (33) kommuniziert,
einem zweiten inneren Strömungskanal (42) mit einem Öffnungsende (42a), das einem Öffnungsende (41a) des ersten inneren Strömungskanals (41) über den Zwischenraum (100) zugewandt ist, wobei der zweite innere Strömungskanal (42) im Inneren der zumindest einen Endplatte (26,27) so angeordnet ist, dass er mit dem ersten inneren Strömungskanal (41) über den Zwischenraum (100) kommuniziert,
zumindest einer ersten Dichtung (70), die in der Umfangsrichtung der Hydraulikmaschine (7) so angeordnet ist, dass sie einen radialen Abschnitt des Zwischenraums (100) zwischen dem Zylinderblock (24) und der zumindest einen Endplatte (26,27), der sich in der radialen Richtung erstreckt, ausfüllt, und
einer zweiten Dichtung (80), die in dem Zwischenraum (100) zwischen dem Zylinderblock (24) und der zumindest einen Endplatte (26,27) so angeordnet ist, dass sie das Öffnungsende (41a) des ersten inneren Strömungskanals (41) und das Öffnungsende (42a) des zweiten inneren Strömungskanals (42) umgibt,
wobei eine ausgenommene Nut (102) an der zumindest einen Endplatte (26,27) und dem Zylinderblock (24) ausgebildet ist, wobei die ausgenommene Nut (102) sich in der Umfangsrichtung entlang einer Verbindungslinie (L) zwischen der zumindest einen Endplatte (26,27) und dem Zylinderblock (24) so erstreckt, dass der Zwischenraum (100) zwischen der zumindest einen Endplatte (26,27) und dem Zylinderblock (24) eine Öffnung in einen Nutgrund (103) der ausgenommenen Nut (102) hat, und
wobei die zumindest eine erste Dichtung (70) in der ausgenommenen Nut (102) angeordnet ist.

2. Die Radialkolben-Hydraulikmaschine (7) gemäß Anspruch 1,
wobei die zumindest eine erste Dichtung (70) eine flüssige Abdichtung (71) zum Ausfüllen des Zwischenraums (100) aufweist,
wobei die zweite Dichtung (80) einen O-Ring aufweist, der das Öffnungsende (41a) des ersten inneren Strömungskanals (41) und das Öffnungsende (42a) des zweiten inneren Strömungskanals (42) umgibt, aufweist.

3. Die Radialkolben-Hydraulikmaschine (7) gemäß Anspruch 1, wobei die zumindest eine erste Dichtung (70) aufweist:
eine Basisdichtung (72), die in der ausgenommenen Nut (102) so angeordnet ist, dass sie in engem Kontakt mit dem Nutgrund (103) der ausgenommenen Nut (102) ist, in welche der Zwischenraum (100) eine Öffnung hinein hat, wobei die Basisdichtung (72) einen Ausdünnungsbereich aufweist, in dem eine Dicke in der axialen Richtung mit einer Distanz von dem Nutgrund (103) abnimmt, und
eine Abdeckungsdichtung (74a,74b), die in der ausgenommenen Nut (102) so angeordnet ist, dass sie die Basisdichtung (72) abdeckt.

4. Die Radialkolben-Hydraulikmaschine (7) gemäß Anspruch 3,
wobei die Basisdichtung (72) eine massive Dichtung ist, die eine massive Form zu der Zeit der Installation in die ausgenommene Nut (102) hat, und
wobei die Abdeckungsdichtung (74a,74b) eine flüssige Abdichtung ist, die eine flüssige Form zu der Zeit der Installation in die ausgenommene Nut (102) hat.

5. Die Radialkolben-Hydraulikmaschine (7) gemäß Anspruch 2 oder 4,
wobei die zumindest eine erste Dichtung (70) ferner ein Deckelelement (76) aufweist, das so angeordnet ist, dass es die flüssige Abdichtung (71;74a,74b) abdeckt.

6. Die Radialkolben-Hydraulikmaschine (7) gemäß Anspruch 5,
wobei das Deckelelement (76) eine Gummilage aufweist, die mit der flüssigen Abdichtung (71;74a,74b) verbunden ist.

7. Die Radialkolben-Hydraulikmaschine (7) gemäß einem der Ansprüche 1 bis 6, ferner mit einer Rückhalteplatte (75), die so angeordnet ist, dass sie die zumindest eine erste Dichtung (70) abdeckt und die an zumindest einem von dem Zylinderblock (24) oder der zumindest einen Endplatte (26,27) befestigt ist.

8. Die Radialkolben-Hydraulikmaschine (7) gemäß einem der Ansprüche 1 bis 7,
wobei die zumindest eine Endplatte (26,27) Endplatten (26,27) aufweist, die an jeder Seite des Zylinderblocks (24) in der axialen Richtung angeordnet sind, und
wobei die zumindest eine erste Dichtung (70) ein Paar von ersten Dichtungen (70) aufweist, die in der Umfangsrichtung so angeordnet sind, dass sie Zwischenräume (100) zwischen den Endplatten (26,27) und jeweiligen Enden des Zylinderblocks (24) ausfüllen.

9. Die Radialkolben-Hydraulikmaschine (7) gemäß einem der Ansprüche 1 bis 8, ferner mit:
einer Rotationswelle (30), an der der Nocken (32) angebracht ist und die zusammen mit dem Nocken (32) rotiert, und
einer Öldichtung (110) zum Abdichten eines Zwischenraums zwischen der Rotationswelle (30) und der zumindest einen Endplatte (26,27).

10. Die Radialkolben-Hydraulikmaschine (7) gemäß einem der Ansprüche 1 bis 9, ferner mit einem Hochdruck-Ölkanal (40), der mit den Arbeitskammern (25) kommuniziert, und einem Niederdruck-Ölkanal (50), durch den Arbeitsöl strömt, wobei das Arbeitsöl einen niedrigeren Druck in dem Niederdruck-Ölkanal (50) hat als in dem Hochdruck-Ölkanal (40),
wobei zumindest ein Teil des Hochdruck-Ölkanals (40) durch den ersten inneren Strömungskanal (41) und den zweiten inneren Strömungskanal (42) gebildet ist.

11. Die Radialkolben-Hydraulikmaschine (7) gemäß Anspruch 10, ferner mit zumindest einem Akkumulator (56) zum Verringern einer Pulsation in dem Niederdruck-Ölkanal (50), wobei der Akkumulator (56) mit dem Niederdruck-Ölkanal (50) kommuniziert.

12. Ein Windturbinengenerator mit:
einem Rotor (5), der konfiguriert ist, um durch Empfangen von Wind zu rotieren,
einer Hydraulikpumpe (7), die konfiguriert ist, um durch den Rotor (5) zum Erzeugen von Drucköl angetrieben zu werden, und
einem Hydraulikmotor (8), der konfiguriert ist, um durch das Drucköl angetrieben zu werden,
wobei die Hydraulikpumpe (7) die Radialkolben-Hydraulikmaschine gemäß einem der Ansprüche 1 bis 11 ist.

13. Ein Verfahren zum Vorsehen einer Dichtung für eine Radialkolben-Hydraulikmaschine (7) mit:
einer Vielzahl von Kolben (20), die in einer Umfangsrichtung der Hydraulikmaschine (7) angeordnet sind,
einem Zylinderblock (24), in dem eine Vielzahl von Zylindern (22) zum Führen der jeweiligen Kolben (20) hin-undher entlang einer Radialrichtung der Hydraulikmaschine (7) ausgebildet ist, wobei der Zylinderblock (24) eine Vielzahl von Segmenten (24A) aufweist, die in der Umfangsrichtung unterteilt sind,
einem Nocken (32), der in einer Nockenkammer (33) angeordnet ist, die sich radial innerhalb oder außerhalb des Zylinderblocks (24) so befindet, dass er der Vielzahl von Kolben (20) zugewandt ist,
zumindest einer Endplatte (26,27), die angrenzend an den Zylinderblock (24) in einer Axialrichtung der Hydraulikmaschine (7) angeordnet ist, wobei die zumindest eine Endplatte (26,27) ein stationäres Teil der Hydraulikmaschine (7) zusammen mit dem Zylinderblock (24) bildet,
einem ersten inneren Strömungskanal (41), der mit Arbeitskammern (25) kommuniziert, die durch die Kolben (20) und die Zylinder (22) gebildet sind, wobei der erste innere Strömungskanal (41) im Inneren des Zylinderblocks (24) so angeordnet ist, dass er eine Öffnung in einen Zwischenraum (100) zwischen dem Zylinderblock (24) und der zumindest einen Endplatte (26,27) hat, wobei der Zwischenraum (100) mit der Nockenkammer (33) kommuniziert,
einem zweiten inneren Strömungskanal (42) mit einem Öffnungsende (42a), das einem Öffnungsende (41a) des ersten inneren Strömungskanals (41) über den Zwischenraum (100) zugewandt ist, wobei der zweite innere Strömungskanal (42) im Inneren der zumindest einen Endplatte (26,27) so angeordnet ist, dass er mit dem ersten inneren Strömungskanal (41) über den Zwischenraum (100) kommuniziert,
wobei das Verfahren aufweist:
einen Schritt des Füllens eines radialen Abschnitts des Zwischenraums (100) zwischen dem Zylinderblock (24) und der zumindest einen Endplatte (26,27), der sich in der radialen Richtung erstreckt, mit einer ersten Dichtung (70), die sich entlang der Umfangsrichtung der Hydraulikmaschine (7) erstreckt,
einen Schritt des Anordnens einer zweiten Dichtung (80) in dem Zwischenraum (100) zwischen dem Zylinderblock (24) und der zumindest einen Endplatte (26,27) so, dass sie das Öffnungsende (41a) des ersten inneren Strömungskanals (41) und das Öffnungsende (42a) des zweiten inneren Strömungskanals (42) umgibt, und
Anordnen einer dritten Dichtung (90) in der axialen Richtung so, dass sie einen Zwischenraum (105) zwischen einem Paar von Segmenten (24A), die von der Vielzahl von Segmenten (24A) nebeneinander in der Umfangsrichtung angeordnet sind, ausfüllt,
wobei eine ausgenommene Nut (102) an der zumindest einen Endplatte (26,27) und dem Zylinderblock (24) ausgebildet ist, die ausgenommene Nut (102) sich in der Umfangsrichtung entlang einer Verbindungslinie (L) zwischen der zumindest einen Endplatte (26,27) und dem Zylinderblock (24) so erstreckt, dass der Zwischenraum (100) zwischen der zumindest einen Endplatte (26,27) und dem Zylinderblock (24) eine Öffnung in einen Nutboden (103) der ausgenommenen Nut (102) hat, und
wobei die erste Dichtung (70) in der ausgenommenen Nut (102) angeordnet ist bzw. wird.

## Revendications

1. Machine (7) hydraulique du type à pistons radiaux, comprenant :
une pluralité de pistons (20) disposés dans une direction circonférentielle de la machine (7) hydraulique ;
un bloc-cylindre (24), dans lequel est formée une pluralité de cylindres (22) pour guider les pistons (20) respectifs en va et vient suivant la direction radiale de la machine (7) hydraulique, le bloc-cylindre (24) comprenant une pluralité de segments (24A) subdivisés dans la direction circonférentielle ;
une troisième étanchéité (90), disposée dans la direction axiale, de manière à remplir un intervalle (105) entre une paire de segments (24A), disposée de manière voisine dans la direction circonférentielle parmi la pluralité de segments (24A) ;
une came (32), disposée dans une chambre (33) de came, placée radialement à l'intérieur ou à l'extérieur du boc cylindre (24), de manière à faire face à la pluralité de pistons (20) ;
au moins un flasque (26, 27), disposé au voisinage du bloc-cylindre (24) dans une direction axiale de la machine (7) hydraulique, le au moins un flasque (26, 27) formant une partie fixe de la machine (7) hydraulique, ensemble avec le bloc-cylindre (24) ;
un premier conduit (41) intérieur d'écoulement communiquant avec des chambres (25) de travail formées par les pistons (20) et les cylindres (22), le premier conduit (41) intérieur d'écoulement étant disposé à l'intérieur du bloc-cylindre (24), de manière à avoir une ouverture dans un intervalle (100) entre le bloc-cylindre (24) et le au moins un flasque (26, 27), l'intervalle (100) communiquant avec la chambre (33) de came ;
un deuxième conduit (42) intérieur d'écoulement ayant une extrémité (42a) d'ouverture, qui fait face à une extrémité (41a) d'ouverture du premier conduit (41) intérieur d'écoulement par l'intermédiaire de l'intervalle (100), le deuxième conduit (42) intérieur d'écoulement étant disposé à l'intérieur du au moins un flasque(26, 27), de manière à communiquer avec le premier conduit (41) intérieur d'écoulement par l'intermédiaire de l'intervalle (100) ;
au moins une première étanchéité (70), disposée dans la direction circonférentielle de la machine (7) hydraulique, de manière à remplir une partie radiale de l'intervalle (100) entre le bloc-cylindre (24) et le au moins un flasque (26, 27), qui s'étend dans la direction radiale ; et
une deuxième étanchéité (80), disposée dans l'intervalle (100) entre le bloc-cylindre (24) et le au moins un flasque (26, 27), de manière à entourer l'extrémité (41a) d'ouverture du premier conduit (41) intérieur d'écoulement et l'extrémité (42a) d'ouverture du deuxième conduit (42) intérieur d'écoulement,
dans laquelle une rainure (102) en creux est formée sur le au moins un flasque (26, 27) et le bloc-cylindre (24), la rainure (102) en creux s'étendant, dans la direction circonférentielle suivant une ligne (L) de joint, entre le au moins un flasque (26, 27) et le bloc-cylindre (24), de manière à ce que l'intervalle (100), entre le au moins un flasque (26, 27) et le bloc-cylindre (24), ait une ouverture dans un fond (103) de la rainure (102) en creux, et
dans laquelle la au moins une première étanchéité (70) est disposée dans la rainure (102) en creux.

2. Machine (7) hydraulique du type à pistons radiaux suivant la revendication 1,
dans laquelle la au moins une première étanchéité (70) comprend un joint (71) à liquide pour remplir l'intervalle (100),
dans laquelle la deuxième étanchéité (80) comprend un joint torique, qui entoure l'extrémité (41a) d'ouverture du premier conduit (41) intérieur d'écoulement et l'extrémité (42a) d'ouverture du deuxième conduit (42) intérieur d'écoulement.

3. Machine (7) hydraulique du type à pistons radiaux suivant la revendication 1,
dans laquelle la au moins une première étanchéité (70) comprend :
une étanchéité (72) de base, disposée dans la rainure (102) en creux, de manière à être en contact étroit avec le fond (103) de la rainure (102) en creux, dans lequel l'intervalle (100) a une ouverture, l'étanchéité (72) de base comprenant une région s'amincissant, dans laquelle une épaisseur, dans la direction axiale décroît au fur et à mesure qu'augmente la distance au fond (103) de la rainure ; et
une étanchéité (74a, 74b) de couverture, disposé dans la rainure (102) en creux, de manière à recouvrir l'étanchéité (72) de base.

4. Machine (7) hydraulique du type à pistons radiaux suivant la revendication 3,
dans laquelle l'étanchéité (72) de base est une étanchéité pleine, qui a une forme pleine au moment de son montage dans la rainure (102) en creux, et
dans laquelle l'étanchéité (74a, 74b) de recouvrement est un joint à liquide, qui a une forme liquide à l'instant du montage dans la rainure (102) en creux.

5. Machine (7) hydraulique du type à pistons radiaux suivant la revendication 2 ou 4,
dans laquelle la au moins une première étanchéité (70) comprend, en outre, un élément (76) formant couvercle, disposé de manière à recouvrir le joint (71 ; 74a, 74b) à liquide.

6. Machine (7) hydraulique du type à pistons radiaux suivant la revendication 5,
dans laquelle l'élément (76) formant couvercle comprend une feuille de caoutchouc liée au joint (71 ; 74a, 74b) à liquide.

7. Machine (7) hydraulique du type à pistons radiaux suivant l'une quelconque des revendications 1 à 6,
comprenant, en outre, une plaque (75) de retenue, disposée de manière à recouvrir la au moins une première étanchéité (70) et fixée à au moins l'un du bloc-cylindre (24) ou du au moins un flasque (26, 27).

8. Machine (7) hydraulique du type à pistons radiaux suivant l'une quelconque des revendications 1 à 7,
dans laquelle le au moins un flasque (26, 27) comprend des flasques (26, 27) disposés de chaque côté du bloc-cylindre (24) dans la direction axiale, et
dans laquelle la au moins une première étanchéité (70) comprend une paire de premières étanchéités (70), disposées dans la direction circonférentielle, de manière à remplir des intervalles (100) entre les flasques (26, 27) et des extrémités respectives du bloc-cylindre (24).

9. Machine (7) hydraulique du type à pistons radiaux suivant l'une quelconque des revendications 1 à 8, comprenant, en outre :
un arbre (30) de rotation, sur lequel la came (32) est montée, et qui tourne ensemble avec la came (32) ; et
une étanchéité (110) à huile pour rendre étanche un intervalle entre l'arbre (30) de rotation et le au moins un flasque (26, 27).

10. Machine (7) hydraulique du type à pistons radiaux suivant l'une quelconque des revendications 1 à 9, comprenant, en outre, un conduit (40) pour de l'huile sous haute pression communiquant avec la chambre (25) de travail et un conduit (50) pour de l'huile sous basse pression, par lequel passe de l'huile de travail, l'huile de travail ayant une pression plus basse dans le conduit (50) pour de l'huile sous basse pression que dans le conduit (40) pour de l'huile sous haute pression,
dans laquelle au moins une partie du conduit (40) pour de l'huile sous haute pression est formée par le premier conduit (41) intérieur d'écoulement et par le deuxième conduit (42) intérieur d'écoulement.

11. Machine (7) hydraulique du type à pistons radiaux suivant la revendication 10, comprenant, en outre, au moins un accumulateur (56) pour supprimer les pulsations dans le conduit (50) pour de l'huile sous basse pression, l'accumulateur (56) communiquant avec le conduit (50) pour de l'huile sous basse pression.

12. Générateur d'éolienne comprenant :
une roue (5), configurée pour tourner en recevant du vent ;
une pompe (7) hydraulique, configurée pour être entraînée par la roue (5), afin de produire de l'huile sous pression ; et
un moteur (8) hydraulique, configuré pour être entraîné par l'huile sous pression,
dans laquelle la pompe (7) hydraulique est la machine hydraulique du type à pistons radiaux suivant l'une quelconque des revendication 1 à 11.

13. Procédé pour donner une étanchéité à une machine (7) hydraulique du type à pistons radiaux, comprenant :
une pluralité de pistons (20) disposés dans une direction circonférentielle de la machine (7) hydraulique ;
un bloc-cylindre (24), dans lequel est formée une pluralité de cylindres (22) pour guider les pistons (20) respectifs en va et vient suivant la direction radiale de la machine (7) hydraulique, le bloc-cylindre (24) comprenant une pluralité de segments (24A) subdivisés dans la direction circonférentielle ;
une came (32), disposée dans une chambre (33) de came, placée radialement à l'intérieur ou à l'extérieur du boc cylindre (24), de manière à faire face à la pluralité de pistons (20) ;
au moins un flasque (26, 27), disposé au voisinage du bloc-cylindre (24) dans une direction axiale de la machine (7) hydraulique, le au moins un flasque (26, 27) formant une partie fixe de la machine (7) hydraulique, ensemble avec le bloc-cylindre (24) ;
un premier conduit (41) intérieur d'écoulement communiquant avec des chambres (25) de travail formées par les pistons (20) et les cylindres (22), le premier conduit (41) intérieur d'écoulement étant disposé à l'intérieur du bloc-cylindre (24), de manière à avoir une ouverture dans un intervalle (100) entre le bloc-cylindre (24) et le au moins un flasque (26, 27), l'intervalle (100) communiquant avec la chambre (33) de came ; et
un deuxième conduit (42) intérieur d'écoulement ayant une extrémité (42a) d'ouverture, qui fait face à une extrémité (41a) d'ouverture du premier conduit (41) intérieur d'écoulement par l'intermédiaire de l'intervalle (100), le deuxième conduit (42) intérieur d'écoulement étant disposé à l'intérieur du au moins un flasque(26, 27), de manière à communiquer avec le premier conduit (41) intérieur d'écoulement par l'intermédiaire de l'intervalle (100) ;
le procédé comprenant :
un stade de remplissage d'une partie radiale de l'intervalle (100) entre le bloc-cylindre (24) et le au moins un flasque (26, 27), qui s'étend dans la direction radiale, par au moins une première étanchéité (70), qui s'étend dans la direction circonférentielle de la machine (7) hydraulique ;
un stade de mise d'une deuxième étanchéité (80), dans l'intervalle (100) entre le bloc-cylindre (24) et le au moins un flasque (26, 27), de manière à entourer l'extrémité (41a) d'ouverture du premier conduit (41) intérieur d'écoulement et l'extrémité (42a) d'ouverture du deuxième conduit (42) intérieur d'écoulement, et
mettre une troisième étanchéité (90) dans la direction axiale, de manière à remplir un intervalle (105) entre une paire de segments (24A), disposée de manière voisine dans la direction circonférentielle parmi la pluralité de segments (24A),
dans lequel une rainure (102) en creux est formée sur le au moins un flasque (26, 27) et le bloc-cylindre (24), la rainure (102) en creux, s'étendant dans la direction circonférentielle suivant une ligne (L) de joint, entre le au moins un flasque (26, 27) et le bloc-cylindre (24), de manière à ce que l'intervalle (100), entre le au moins un flasque (26, 27) et le bloc-cylindre (24), ait une ouverture dans un fond (103) de la rainure (102) en creux, et
dans lequel la au moins une première étanchéité (70) est disposée dans la rainure (102) en creux.
